# EUROPÄISCHE PATENTSCHRIFT

(11) **EP 0 463 516 B1**
(45) Veröffentlichungstag und Bekanntmachung des Hinweises auf die Patenterteilung: **04.09.1996**
(21) Anmeldenummer: 91109817.6
(22) Anmeldetag: 14.06.1991
(51) Int. Cl.: H05B 3/34

(54) **Elektrisches Flächenheizelement**
Planar electrical heating element
Elément de chauffage électrique de surface

(30) Priorität: 28.06.1990 DE 4020580
(43) Veröffentlichungstag der Anmeldung: 02.01.1992
(73) Patentinhaber: WÄRME- UND ELEKTROTECHNIK B. RUTHENBERG GMBH, D-85235 Odelzhausen (DE)
(72) Erfinder: Deger, Reinhard, W-8065 Guggenberg (DE); Lorenzen, Günter, W-8037 Olching-Neuesting (DE); Penzkofer, Hans, W-8000 München 19 (DE); Schuller, Ferdinand, W-8000 München 40 (DE); Weber, Michaela, W-8091 Frabertsham (DE)
(74) Vertreter: Ebbinghaus, Dieter, Dipl.-Ing.

(56) Entgegenhaltungen:
- DE-A- 2 110 632
- DE-A- 3 425 798
- DE-A- 3 513 909
- US-A- 3 472 289
- US-A- 4 063 069
- US-A- 4 245 149
- US-A- 4 558 905
- US-A- 4 590 359

## Beschreibung

Die Erfindung bezieht sich auf ein elektrisches Flächenheizelement der im Oberbegriff des Patentanspruchs 1 beschriebenen, aus der US-A-3 472 289 bekannten Art.

Üblicherweise werden Flächenheizelemente für den genannten Einsatz durch Aufnähen oder Aufkleben eines zickzack- oder mäanderförmig verlegten Heizleiters auf bzw. zwischen geeignete Textilien oder Schaumstoffe hergestellt, wobei das Verlegemuster der jeweiligen Form und Beanspruchung angepaßt werden muß.

Außerdem sind gänzlich unterschiedliche Konstruktionen für die verschiedenen Arten der Einbindungen der Flächenheizung in den zu beheizenden Gegenstand erforderlich. Für das Gebiet der Autositzheizung seien nur beispielhaft genannt: Einschieben eines Elements zwischen Polsterbezugstoff und Polsterung, Einnähen des Elements in den Bezugstoff, Aufkleben des Elements auf das Polster, Einschäumen des Elements in die Oberseite des Schaumkissens oder in den Schaumstoff-Bezugstoff-Verbund.

Wesentliche Nachteile bekannter Flächenheizelemente sind
- die jeweils einzelanwendungsbezogene Konstruktion und dadurch bedingter hoher Herstellungsaufwand,
- das Ausfallrisiko des Gesamtheizelementes bei örtlicher Unterbrechung des Heizleiters durch Gewalt oder Dauerbruch,
- das Brandrisiko ausgehend von
   a) einer teilweisen mechanischen Schädigung des Heizleiters im Betrieb durch örtliche Überhitzung bis hin zum Durchschmelzen des normalerweise metallischen Heizleiters,
   b) der zum Teil mangelnden Verformbarkeit des Heizelements, was zu örtlicher Überhitzung des Heizelements durch Faltenbildung führen kann,
   c) teilweiser Lösung der die Heizleiter fixierenden Verklebung durch thermische oder mechanische Beanspruchung, was zum Verrutschen der Heizleiter, die dadurch unmittelbar neben- oder übereinander zu liegen kommen und dadurch zu örtlicher Überhitzung führen kann.

Zur Reduzierung des Herstellungsaufwandes und des Verrutschrisikos ist es aus der CH-PS 2 00 025 bekannt, einen langen Heizleiter in die textile Maschenware durch Schußeintrag direkt fest einzubinden. Dieses Flächenheizelement ist jedoch nicht in ausreichendem Maße dreidimensional verformbar.

Besser erfüllt diese Anforderung das aus der DE-AS-11 86 157 bekannte Flächenheizelement, bei dem die Heizleiter wellenoder sinusförmig als Kettfäden durch eine Maschenware verlaufen.

Um die Nachteile aus der Verwendung von nur einem langen Heizleiter zu vermeiden, ist aus der DE-OS-24 45 334 ein Flächenheizelement aus Gewebe bekannt, bei dem die in Kettrichtung verlaufenden Geweberänder als elektrische Kontaktstreifen und bestimmte Schußfäden als Heizleiter ausgebildet sind. Die Gewebe sind jedoch nicht in ausreichendem Maße verformbar.

Ein aus der DE-OS-34 16 596 bekanntes netzartiges Flächenheizelement beseitigt den Nachteil der mangelnden Verformbarkeit durch seinen netzartigen Aufbau aus Maschenware, wobei das gesamte Netz aus Widerstandsmaterial besteht und die Kontaktleiter aus mehreren parallelen Drähten oder Litzen im Randbereich des Flächenheizelementes ausgebildet sind. Dieses Flächenheizelement ist in der Herstellung verhältnismäßig teuer und außerdem ist es nicht möglich, die Heizleistung und Heizleistungsverteilung dem jeweiligen Bedarf anzupassen. So ist beispielsweise bei Autositzen der Wärmeübergang wegen der höheren Belastung besser als im Bereich der Lehne, so daß dort eine höhere spezifische Heizleistung je Flächeneinheit notwendig ist.

Aus der gattungsbildenden US-A-3 472 289 ist eine netzartige textile Maschenware bekannt, in die an verschiedenen Stellen Heizleiter als alternative Fäden eingezogen sind. Ein solches Flächenheizelement läßt sich zwar dreidimensional gut verformen, jedoch besteht bei Dauerbeanspruchung die Gefahr einer textilen Verschiebung durch allmähliches Verrutschen eines oder mehrerer Heizleiter innerhalb des Maschenverbunds oder durch Herausrutschen oder Herausziehen eines oder mehrerer Heizleiter aus dem Maschenverbund. Durch derartige textile Verschiebungen können Kurzschlüsse hervorgerufen werden.

Aus den DE-OS-24 40 428 und 17 65 502 ist es an sich bekannt, metallisch oder elektrisch leitende Kunststoffasern aus verschiedenen Grundmaterialien als Heizleiter zu verwenden, die zum Teil durch entsprechende Überzüge und Beimischungen zum Grundmaterial ihre elektrischen Eigenschaften erhalten. Diese Fasern können auch einen positiven Temperaturkoeffizienten haben.

Der Erfindung liegt die Aufgabe zugrunde, ein elektrisches Flächenheizelement zu schaffen, das einfach und billig herstellbar ist, das sich dreidimensional gut verformen läßt, Dauerbeanspruchungen gewachsen ist, bei dem die Brandgefahr ausgeschaltet ist und das sich in einfacher Weise dem jeweiligen Anwendungsfall anpassen läßt.

Diese Aufgabe wird ausgehend von dem gattungsgemäßen Flächenheizelement erfindungsgemäß durch die kennzeichnenden Merkmale des Patentanspruchs 1 gelöst.

Das erfindungsgemäße Flächenheizelement läßt sich einfach und billig als Meterware herstellen, die anschließend unter Auftrennung nebeneinander verlaufender Kontakt leiter in mehrere Einzelbahnen zerschnitten wird. Da die Heizleiter wellenförmig an der Maschenware befestigt sind, läßt sich das erfindungsgemäße Flächenheizelement innerhalb weiter Grenzen praktisch beliebig dehnen, zusammenschieben und senkrecht zu seiner Fläche verformen. Trotzdem sind die Heizleiter sicher gehalten, so daß Kurzschlüsse verhindert werden. Auch ist es unschädlich, wenn einzelne Heizleiter durch äußere Gewalteinwirkung aufgetrennt werden, da die benachbarten Heizleiter genügend Wärme erzeugen.

Bevorzugte Weiterbildungen des erfindungsgemäßen Flächenheizelements sind Gegenstand der Patentansprüche 2 bis 7.

Ausführungsbeispiele des erfindungsgemäßen Flächenheizelementes werden anhand der Zeichnung erläutert. Es zeigen:
- Fig. 1: die perspektivische Ansicht eines erfindungsgemäßen elektrischen Flächenheizelementes,
- Fig. 2: eine Draufsicht auf einen Teil des Flächenheizelements der Fig. 1,
- Fig. 3: die Teilansicht einer zweiten Ausführungsform des Flächenheizelements,
- Fig. 4: die Teilansicht einer dritten Ausführungsform des Flächenheizelements und
- Fig. 5: einen mit einem erfindungsgemäßen elektrischen Flächenheizelement versehenen Autositz.

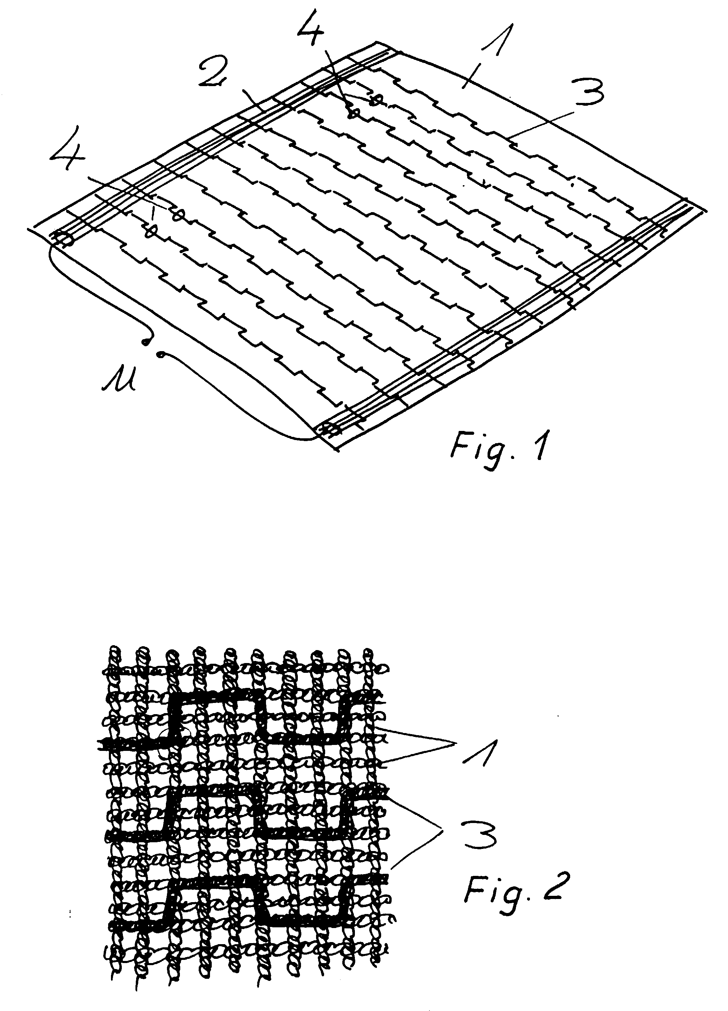

Das in Fig. 1 gezeigte Flächenheizelement besteht aus textiler Maschenware 1, vorzugsweise aus Kettenwirkware mit geeigneter Konstruktion und Bindung, z.B. Atlas-, Trikot- oder Tuchfilet mit vier-, sechs- oder achtreihiger Bindung. Dieses elastische und materialsparende Grundmaterial hat eine Struktur ähnlich einem Netz mit vier-, sechs- oder achteckigen Maschen. Als Material werden geeignete Kunstfasergarne gewählt.

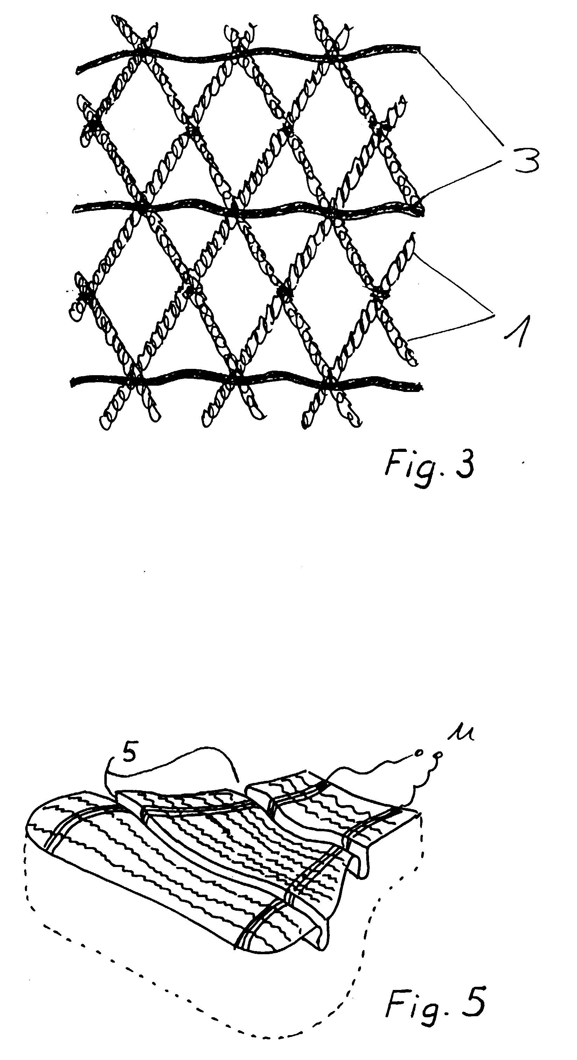

In definierten Abständen, z.B. der Breite der zu beheizenden Flächen entsprechend, sind mehrere nebeneinanderliegende Kunstfasergarne durch niederohmig leitende Garne aus Metall oder Metall-Kunstfasergemisch ersetzt und bei Bedarf die Bindungsart zu einer größeren Dichte hin verändert. Die so entstehenden Längsstreifen in der Maschenware stellen die Kontaktleiter 2 dar. Senkrecht zu diesen Kontaktstreifen sind z.B. durch versetzten (Fig. 2) oder geraden Schußeintrag die eigentlichen elektrischen Heizleiter 3 in die Maschenware 1 eingebracht. Entscheidend ist, daß die Heizleiter 3 dabei in die für die Elastizität des gesamten Flächenheizelements notwendige wellenförmige Lage gebracht und durch festes Einbinden in den Maschenverbund des Grundmaterials 1 an sehr vielen Punkten eindeutig fixiert und an den Kontaktstreifen redundant kontaktiert werden. Bei netzartiger Ausbildung des Grundmaterials 1 erfolgt dieses Einbinden bevorzugt an den Knotenstellen (Fig. 3). Die Kontaktleiter 2 sind an Anschlußklemmen 11 angeschlossen.

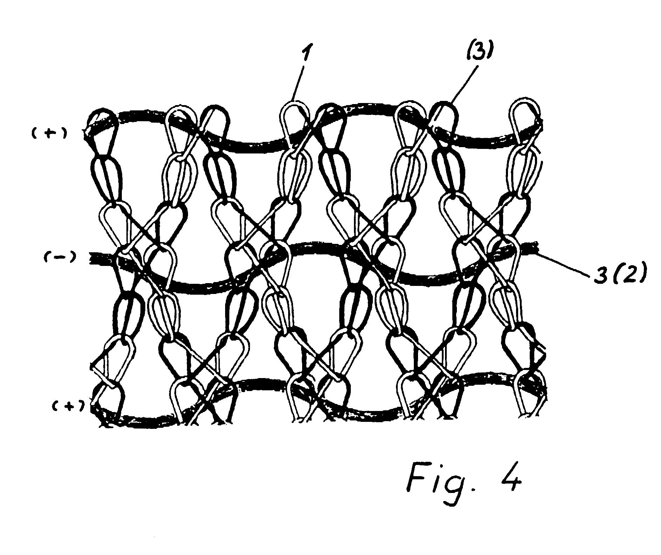

Fig. 4 zeigt genauer die Einbindung der Heizleiter 3 an den Knotenstellen des Grundmaterials. In einer dritten Ausführungsform, die ebenfalls in Fig. 4 gezeigt ist, sind die schwarz ausgezogenen Fäden (3) der Maschenware 1 schlingenförmig ausgebildet, d.h. sind selbst Bestandteil der Maschenware 1, während die mit 3 bezeichneten Fäden die Kontaktleiter (2) darstellen. Bei dieser Ausführungsform lassen sich die Heizleiter (3) hochohmig ausführen, während die Kontaktleiter (2) in vielfältigen Mustern unterbrochen oder abwechselnd an die Stromquelle angeschlossen werden können, wie durch die in Klammern angegebenen Polaritätsbezeichnungen angedeutet ist.

Die Heizleiter 3 selbst bestehen aus elektrisch leitenden Kunststoffäden oder Kunststoffgarnen mit oder ohne PTC-Effekt, oder aus Kunststoffgarnen, denen feine Metalldrähte beigemischt sind.

Das erfindungsgemäße Flächenheizelement erfüllt die Forderungen nach guter dreidimensionaler Verformbarkeit und Elastizität durch seine konstruktive Ausbildung, bei der insbesondere die elektrisch leitenden Elemente nicht auf Zug, sondern nur auf Biegung und Torsion beansprucht werden.

Die Forderung nach hoher Betriebssicherheit wird durch die redundante Ausführung im Bereich der Kontaktstreifen und durch die Vielzahl der einzelnen, zueinander parallel geschalteten elektrischen Heizleiter 3 erreicht. Dadurch wird auch das Brandrisiko, insbesondere bei Verwendung von Heizelementen aus elektrisch leitenden Kunststoffen, erheblich reduziert.

Das erfindungsgemäße Flächenheizelement läßt sich vielseitig verwenden und den jeweiligen Anforderungen praktisch beliebig anpassen. Ist die spezifische Flächenheizleistung ursprünglich zu hoch, läßt sie sich sehr einfach dadurch reduzieren, daß einzelne Heizleiter 3 (bei 4 in Fig. 1) unterbrochen bzw. die Kontaktleiter zum Zwecke der Parallel- oder Reihenschaltung unterbrochen werden.

Bei Autositzheizungen sind außerdem im Bereich der Sitzgräben (Fig. 5) alle Heizelemente unterbrochen, d.h. die Flächenheizleistung ist örtlich definiert auf Null reduziert.

Das Flächenheizelement wird an die spezifische Geometrie des Einsatzfalles dadurch angepaßt, daß ein Maschenwarenzuschnitt mit wenigstens zwei Kontaktstreifen und geeigneter Länge im Rahmen seiner Elastizität zwei- oder dreidimensional verformt und in dieser Lage thermisch fixiert wird (Fig. 5).

Ein so in Leistung und Geometrie angepaßtes Heizelement eignet sich für alle bekannten Arten der Einbringung in Autositze.

Besondere Eignung besteht durch die netzartige Grundstruktur und die Fixierung in der erforderlichen dreidimensionalen Geometrie für alle Arten der Einschäumtechnik bei Autositzheizungen.

## Patentansprüche

1. Elektrisches Flächenheizelement aus netzartiger textiler Maschenware (1), mit Heizleitern (3) und an die Enden der Heizleiter (3) angeschlossenen Kontaktleitern (2), wobei die Heizleiter (3) wellenförmig und im wesentlichen parallel zueinander verlaufen und in Abständen in den Maschenverbund der textilen Maschenware (1) fest eingebunden sind, die Kontaktleiter (2) im wesentlichen senkrecht zu den Heizleitern (3) verlaufen und dem textilen Garn beilaufend oder durch teilweisen oder vollständigen Ersatz des textilen Grundmaterials bei mehreren unmittelbar nebeneinander liegenden Maschenreihen in die Maschenware eingebunden sind,
dadurch **gekennzeichnet**, daß jeder Heizleiter (3) im Maschenverbund der textilen Maschenware (1) nur im Bereich der Punkte der Wellenmittellinie durch Verschlingung befestigt und die Wellenform im übrigen durch Einbinden eindeutig fixiert ist.

2. Elektrisches Flächenheizelement nach Anspruch 1, dadurch gekennzeichnet, daß die Heizleiter (3) in regelmäßigen Abständen in den Maschenverbund der textilen Maschenware (1) eingebunden sind.

3. Elektrisches Flächenheizelement nach Anspruch 1 oder 2, dadurch gekennzeichnet, daß die Heizleiter (3) aus Metall oder elektrisch leitendem Kunststoff bestehen.

4. Elektrisches Flächenheizelement nach Anspruch 3, dadurch gekennzeichnet, daß der elektrische Widerstand der Heizleiter (3) einen positiven Temperaturkoeffizienten hat.

5. Elektrisches Flächenheizelement nach einem der vorstehenden Ansprüche, dadurch gekennzeichnet, daß die Kontaktleiter (2) aus Metalldraht oder metallischen Litzen bestehen.

6. Elektrisches Flächenheizelement nach einem der vorstehenden Ansprüche, dadurch gekennzeichnet, daß die textile Maschenware (1) wenigstens teilweise aus thermisch fixierbarem Kunststoffgarn besteht.

7. Elektrisches Flächenheizelement nach einem der vorstehenden Ansprüche, dadurch gekennzeichnet, daß Heizleistung und Heizleistungsverteilung durch Durchtrennen einzelner Heizleiter (3) und/oder einzelner bzw. aller Kontaktleiter (2) an bestimmten Stellen eingestellt sind.

## Claims

1. An electric surface-heating element of net-like textile knitted fabric (1), having heating conductors (3) and contact conductors (2), connected to the ends of the heating conductors (3), the heating conductors (3) running in a wavy manner essentially parallel to one another and being firmly bound at intervals into the structure of the textile knitted fabric (1), the contact conductors (2) running essentially perpendicularly to the heating conductors (3) and being bound into the knitted fabric in that they run past the textile yarn or replace the textile base material partially or completely over a number of directly adjacent courses, characterised in that each heating conductor (3) is fastened in the structure of the textile knitted fabric (1) by intertwining only in the region of the points of the wave centre line and the wave form is otherwise definitively fixed by binding-in.

2. An electric surface-heating element according to claim 1, characterised in that the heating conductors (3) are bound at regular intervals into the structure of the textile knitted fabric (1).

3. An electric surface-heating element according to either claim 1 or claim 2, characterised in that the heating conductors (3) are composed of metal or electrically conducting plastics material.

4. An electric surface-heating element according to claim 3, characterised in that the electrical resistance of the heating conductors (3) has a positive temperature coefficient.

5. An electric surface-heating element according to any one of the preceding claims, characterised in that the contact conductors (2) are composed of metal wire or metallic stranded wires.

6. An electric surface-heating element according to any one of the preceding claims, characterised in that the textile knitted fabric (1) is composed at least partially of thermally fixable synthetic yarn.

7. An electric surface-heating element according to any one of the preceding claims, characterised in that heating output and heating output distribution are set by interrupting individual heating conductors (3) and/or individual or all contact conductors (2) at certain points.

## Revendications

1. Élément de chauffage électrique de surface en tissu maillé (1) textile réticulé, comportant des conducteurs chauffants (3) et des conducteurs de contact (2) raccordés aux extrémités des conducteurs chauffants (3), les conducteurs chauffants (3) passant sous forme ondulée et essentiellement parallèlement les uns par rapport aux autres et étant solidement encastrés à intervalles dans l'assemblage maillé du tissu maillé (1) textile, les conducteurs de contact (2) passant essentiellement perpendiculairement aux conducteurs chauffants (3) et en suivant le fil textile ou sont encastrés dans le tissu maillé par remplacement partiel ou total de la matière de base textile par plusieurs rangs de mailles situés directement les uns à côté des autres, caractérisé en ce que chaque conducteur chauffant (3) est fixé par entrelacement dans l'assemblage maillé du tissu maillé (1) textile uniquement dans la zone des points de la ligne médiane ondulée et la forme ondulée est de plus maintenue de façon unique par encastrement.

2. Elément de chauffage électrique de surface selon la revendication 1, caractérisé en ce que les conducteurs chauffants (3) sont encastrés à intervalles réguliers dans l'assemblage maillé du tissu maillé (1) textile.

3. Elément de chauffage électrique de surface selon la revendication 1 ou 2, caractérisé en ce que les conducteurs chauffants (3) sont composés de métal ou de matière synthétique conductrice électriquement.

4. Elément de chauffage électrique de surface selon la revendication 3, caractérisé en ce que la résistance électrique des conducteurs chauffants (3) a un coefficient de température positif.

5. Elément de chauffage électrique de surface selon l'une des revendications précédentes, caractérisé en ce que les conducteurs de contact (2) sont composés de fil métallique ou de fils torsadés métalliques.

6. Elément de chauffage électrique de surface selon l'une des revendications précédentes, caractérisé en ce que le tissu maillé (1) textile est composé au moins partiellement de fil synthétique pouvant être fixé thermiquement.

7. Elément de chauffage électrique de surface selon l'une des revendications précédentes, caractérisé en ce que la puissance de chauffage et la répartition de la puissance de chauffage sont réglées à certains endroits en séparant différents conducteurs chauffants (3) et/ou différents ou tous les conducteurs de contact (2).
